(19) Europäisches Patentamt
European Patent Office
Office européen des brevets

(11) EP 4 617 314 A1

(12) EUROPEAN PATENT APPLICATION

(43) Date of publication:
**17.09.2025 Bulletin 2025/38**

(21) Application number: **24163772.7**

(22) Date of filing: **15.03.2024**

(51) International Patent Classification (IPC):
***C08L 45/00*** *(2006.01)*

(52) Cooperative Patent Classification (CPC):
(C-Sets available)
**C08L 45/00;** C08L 2203/20 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Daikin Industries, Ltd.**
**Osaka-shi, Osaka 530-0001 (JP)**

(72) Inventors:
- **Pieper, Thorsten**
  **40211 Düsseldorf (DE)**
- **Verheijden, Andreas Petrus Gerardus**
  **40211 Düsseldorf (DE)**
- **Hupfield, Peter**
  **40211 Düsseldorf (DE)**

(74) Representative: **Hoffmann Eitle**
**Patent- und Rechtsanwälte PartmbB**
**Arabellastraße 30**
**81925 München (DE)**

# (54) COMPOSITION FOR FORMING A MOLDED PRODUCT HAVING LOW DIELECTRIC LOSS, METHOD FOR FORMING A MOLDED PRODUCT, AND MOLDED PRODUCT HAVING LOW DIELECTRIC LOSS

(57) The present invention provides a composition for forming a molded product, comprising
A a thermoplastic binder phase, and, dispersed in the thermoplastic binder phase
B at least one material capable of reducing the dielectric constant and dielectric loss of the composition; wherein the thermoplastic binder phase comprises at least

A.1 one or more cyclic olefin copolymers and
A.2 a thermoplastic material other than a cyclic olefin copolymer; wherein the amount of B the material capable of reducing the dielectric constant and dielectric loss of the composition 5% by weight or more, relative to the total weight of the composition, and wherein the total amount the one or more cyclic olefin copolymers is from 10 to 95% by weight of the total weight of the thermoplastic binder phase A.

The composition is capable of providing a molded product having a low dielectric loss at wavelengths in the millimeter range and is thus suitable for applications as radome or as coverings and housings of cell phones, tablet computers, laptop computers, desktop computers, printers, scanners, remote controls, transmission towers, Wi-Fi transmission devices, routers, Wi-Fi repeaters, and gaming consoles. The present invention also relates to a method for forming a molded product, and a molded product having low dielectric loss obtained from the composition.

EP 4 617 314 A1

(52) Cooperative Patent Classification (CPC): (Cont.)

C-Sets
**C08L 45/00, C08L 67/02, C08K 7/14;**
**C08L 45/00, C08L 67/02, C08K 7/28**

## Description

### Field of the Invention

The present invention concerns compositions for forming a molded product, a molded product obtained therefrom, and a method for forming a molded product using the composition. The composition and the molded product obtained therefrom are characterised by a low dielectric loss in the millimeter wavelength range, rendering them suitable for e.g. radar domes.

### Background of the Invention

Molded articles are used in a wide variety of applications, and they are formed from a large number of possible compositions, typically based on thermoplastic polymers such as polyethylene, polypropylene, polyesters such as PET, polyamides, polystyrenes, etc, including homopolymers and copolymers. Also, methods for preparing are widely known, and examples include injection molding, blow molding, extrusion molding, thermoforming, compression molding, rotational molding, etc.

However, all polymers have limitations in respect of certain characteristics, such as chemical resistance, transparency for visible light and electromagnetic waves of other wavelengths, dimensional stability, processability, hardness, etc. Finding a material providing the suitable balance of properties for a given application is often challenging, and often the desired balance can only be achieved by the use of certain additives or by using blends of polymers. In view of the large variety of polymers and additives, the number of possible combinations is basically unlimited.

While for many applications durability and toughness our key requirements, certain applications require additional properties, such as a low loss dielectric loss. Dielectric loss, also known as dielectric dissipation factor or tan $\delta$ (tan delta), is a measure of the energy lost as heat in a dielectric material when subjected to an alternating electric field. When an alternating voltage is applied to a dielectric material, the electric dipoles within the material attempt to align themselves with the changing electric field. This alignment process is not instantaneous, and it takes some time for the dipoles to respond to the alternating field. The delay in the alignment causes the dielectric material to absorb energy, and a portion of this absorbed energy is subsequently lost as heat due to various factors, including molecular friction and interfacial effects. Dielectric loss is characterized by the dielectric loss angle (tan $\delta$), which is the tangent of the phase angle difference between the applied alternating electric field and the resulting electric polarization within the material. Mathematically, it can be expressed as

$$\tan\delta = \frac{\text{Imaginary part of complex permittivity}}{\text{Real part of complex permittivity}}$$

where the complex permittivity accounts for both the real (storage) and imaginary (loss) components of the dielectric constant. High dielectric loss is undesirable in many applications, especially in capacitors and insulating materials, as it leads to energy dissipation and can contribute to the heating of the material. Therefore, materials with low dielectric loss are preferred in applications where efficient energy storage or insulation is crucial, such as in electronic devices and power distribution systems.

It is important to note that the dielectric loss of a material is frequency-dependent, and different dielectric materials exhibit varying degrees of dielectric loss at different frequencies. Thus, a material exhibiting a low dielectric loss at a given frequency encountered in a specific application may not be suitable for another application where the encountered electromagnetic waves have a different frequency.

Molded articles have been used in a variety of devices relying on the use of electromagnetic radiation, including for example radar devices. Radar devices used in e.g. cars and trucks typically operate in the millimeter-wave frequency range. The two primary frequency bands used for automotive radar applications are the 24 GHz and 76-81 GHz bands. Thus, for radar domes (a structural weatherproof enclosure, covering or housing that protects a radar antenna), a low dielectric loss in this wavelength region is required.

Plastic materials currently in use for the manufacture of radomes include, amongst others, ABS, Polycarbonate, Kydex™, Noryl™ (available from Curbell Plastics), PEEK, PTFE, PE, Polyurethane foams, and Polyesters such as PBT (polybutylene terephthalate), which may also be blended with reinforcing materials such as glass fibers. Yet, some of these materials require specific processing steps and are incompatible with e.g. extrusion moulding techniques, while others suffer from insufficient transparency (too high dielectric loss) at the radar wavelength employed, thereby limiting the operating distance of the radar device.

For automotive short-range radar applications going into the millimeter wavelength range, current commercially available thermoplastic materials used as radome material do not meet all of the future challenges and requirements in

terms of mechanical stability and low dielectric loss to enlarge the radar sensor operating range. Especially, a thermoplastic material with a low dielectric loss (df) and dielectric constant (dk) is required which is also stable over wide temperature and frequency range, combined with a high mechanical stability and dimensional tolerancing to avoid negative mechanical effects like warpage after processing via injection molding. Based on the final assembling process, such a new material may also have to be laser-weldable and also require a low water/moisture absorption. It goes without saying that for a material to be laser-weldable the material must be able to absorb at least a part of the laser radiation and convert it into heat, i.e. a significant dielectric loss at the laser wavelength is required to heat up the material to allow welding.

WO 2001/074146 A1 describes a polybutylene terephthalate composition, comprising as component (A) polybutylene terephthalate (PBT) resin, as component (B) polyester copolymer with melting point from 105°C to 185°C, as component (C) vinyl-based polymer, and optionally as component (D) glass bubbles. The composition is to be used in high frequency applications, e.g. cell phones and mobile communication devices.

WO 2018/151800 A2 relates to a radome material including a low viscosity cyclic olefin resin. It is said that the technology described here can produce a radome with low dielectric constant, low loss tangent, low moisture absorption, light weight, and tensile strength. The document relies on a complicated vacuum assisted resin transfer method (VARTM) and employs the cyclic olefin resin as one layer material amongst others and requires a substrate such as a glass fiber mat or a non-woven fabric onto which it is deposited or into which it is impregnated, followed by curing. The technology described in this document is thus disadvantageous in that it is incompatible with technologies used for mass production, such as extrusion moulding, and requires an additional curing step. Further, the need for a substrate and additional layers increases thickness, weight and costs, and complicates the manufacture of the radome.

## Problems to be solved by the present Invention

The present invention thus aims at providing a material suitable for the production of a moulded article, a method for producing a molded article and a molded article obtained therefrom, which exhibits one or more, preferably more than one, and more preferably all of the following:

- low dielectric loss at the operating wavelength of a radar device;
- laser weldability;
- sufficiently high mechanical toughness and durability;
- processability by molding techniques suitable for mass production, in particular injection molding,
- no or reduced occurrence of warping
- no need for additional curing steps
- no need for additional layers and/or substrates, thereby allowing to manufacture radar domes having reduced thickness (which in turn allows for cost and weight reduction);
- ability to provide for optimized thickness for reduced or minimum radar frequency distortion and absorption, as expressed by dB loss.

## Summary of the Invention

The present inventors have conducted diligent studies and have found that the above problem can be solved by the following embodiments:

1. A composition for forming a molded product, comprising

A a thermoplastic binder phase, and, dispersed in the thermoplastic binder phase
B at least one material capable of reducing the dielectric constant and dielectric loss of the composition

wherein the thermoplastic binder phase comprises at least

A.1 one or more cyclic olefin copolymers and

A.2 a thermoplastic material other than a cyclic olefin copolymer that is preferably selected from the group consisting of polyesters, polyolefins, in particular homopolymers of ethylene, homopolymers of propylene and copolymers of ethylene or propylene with other alpha-olefins, polyamides, polycarbonates, polystyrene, copolymers of styrene such as ABS, SAN and SB, acrylic polymers, polyether sulfones, polyether ether ketones, polyetherimide, polyphenylene oxide, polyphenylene sulfide, and melt-processible fluorinated polymers such as PVDF or PTFE,

wherein the amount of B the material capable of reducing the dielectric constant and dielectric loss of the composition 5% by weight or more, relative to the total weight of the composition, and
wherein the total amount the one or more cyclic olefin copolymers is from 10 to 95% by weight of the total weight of the thermoplastic binder phase A.
2. The composition for forming a molded product according to embodiment 1, wherein B the material capable of reducing the dielectric constant and dielectric loss of the composition comprises one or more of

| | |
|---|---|
| B.1 | glass fibers; |
| B.2 | hollow glass spheres; and |
| B.3 | aerogels; |

and preferably both of B.1 glass fibers and B.2 hollow glass spheres.
3. The composition for forming a molded product according to embodiment 1 or 2, wherein the thermoplastic binder phase comprises in addition to the components A.1 and A.2

A.3 one or more impact modifiers that may or may not have a core-shell structure, preferably selected from the group consisting of styrene block copolymers (SBC), such as styrene-ethylene-butylene-styrene block copolymer (SEBS), methyl methacrylate-butadiene- styrene (MBS), acrylonitrile-butadiene-styrene (ABS), acrylic impact modifiers (AIM), such as acrylate methacrylate copolymers, acrylonitrile-styrene-acrylate (ASA), ethylene propylene diene monomer (EPDM) copolymers, chlorinated polyethylene (CPE), ethylene-vinyl acetate copolymer (EVA), acrylonitrile-butadiene rubber (NBR), maleic-anhydride modified polymers such as maleic anhydride grafted EPDM and maleic anhydride grafted ethylene/C3-12 $\alpha$-olefin copolymers, ethylene-unsaturated epoxide copolymers, ethylene-carboxylic acid anhydride copolymers, polymers made from hydroxyl-functional monomers, e.g. including repeating units derived from hydroxy $C_{2-6}$ alkyl (meth)acrylate; and combinations thereof;
wherein the impact modifier is present in an amount of 0.1 to 10% by weight of the total weight of the thermoplastic binder phase A.

4. The composition for forming a molded product according to embodiment 1, 2 or 3, wherein the composition satisfies one or more of the following

(a) Density: 1.30 g/cm$^3$ or less
(b) Dielectric Constant at 76.5 GHz: 2.58 or less
(c) Dielectric Loss at 76.5 GHz: 0.01 or less
(d) Light Transmittance at 980 nm: 8% or more.

5. The composition for forming a molded product according to any one of embodiments 1 to 4, wherein A.2 the thermoplastic material other than a cyclic olefin copolymer is selected from polyolefins and polyesters, wherein the polyester preferably is a poly(alkylene) terephthalate, more preferably poly(butylene)terephthalate, and wherein preferably the thermoplastic material other than a cyclic olefin copolymer that is selected from polyolefins and polyesters is present in an amount of from 30 to 65 % by weight of the total composition.
6. The composition for forming a molded product according to any one of embodiments 1 to 5, wherein the amount of cyclic olefin copolymer is from 10 to 85% by weight, preferably from 15 to 60 % by weight, of the total composition.
7. The composition for forming a molded product according to any one of embodiments 1 to 6, wherein the cyclic olefin copolymer is a copolymer consisting of repeating units derived from ethylene and one or more cyclic olefins, wherein the cyclic olefin preferably is norbornene or a norbornene derivative, preferably 2-norbornene.
8. The composition for forming a molded product according to Embodiment 7, wherein the content of norbornene or the norbornene derivative, which preferably is 2-norbornene, is 45 mol% or more, preferably 50 mol% or more, of all repeating units of the copolymer of ethylene and a cyclic olefin.
9. The composition for forming a molded product according to any one of embodiments 1 to 8, which comprises glass fibers and hollow glass spheres as component B, and which satisfies the following relative amounts of the components in % by weight, relative to the total weight of the composition:

| | |
|---|---|
| A | thermoplastic binder phase: 60 to 90, preferably 70 to 80 |
| B.1 | glass fibers: 5 to 20, preferably 10 to 15 |

(continued)

| | |
|---|---|
| B.2 | hollow glass spheres: 5 to 20, preferably 10 to 15. |

10. The composition for forming a molded product according to embodiment 9, wherein the thermoplastic binder phase comprises, in % by weight relative to the total weight of the binder phase:

| | | |
|---|---|---|
| A.1 | cyclic olefin copolymer | 15 to 75 |
| A.2 | poly(alkylene) terephthalate | 25 to 85 |
| A.3 | impact modifier | 0 to 20 |

11. The composition for forming a molded product according to any one of embodiments 1 to 7, wherein the component B comprises B.3 one or more aerogels, wherein the aerogel is preferably selected from silica and polymeric aerogels, such as e.g. obtained from polyimide, and/or wherein preferably the aerogel has a porosity of 90% or more.
12. The composition for forming a molded product according to any one of embodiments 1 to 11, wherein the glass forming the glass fibers and/or the hollow glass spheres has a dielectric constant of 6.5 (at 1 MHz) or less.
13. A molded article obtainable from the composition according to any one of Embodiments 1 to 12.
14. The molded article according to embodiment 13, which is a radome or housing for an electronic device, the electronic device preferably being a device emitting and/or receiving radiation in the range of 5 MHz to 130 GHz
15. The molded article according to embodiment 14, wherein the radome or housing is part of a radar device of vehicles, preferably cars or trucks.
16. A method for producing the molded article according to embodiment 13 or 14, which comprises processing the composition according to any one of embodiments 1 to 12 by extrusion molding and/or laser welding.
17. Use of a composition as defined in any one of embodiments 1 to 12 for producing a housing or radome of an electronic device, preferably a device emitting and/or receiving radiation in the range of 5 MHz to 130 GHz, more preferably a radar device.
18. An electric or electronic device emitting and/or receiving electromagnetic radiation in the range of 5 MHz to 130 GHz, the device comprising a housing or radome made from a composition as defined in any one of embodiments 1 to 12 or a molded article according to embodiment 13 or 14.
19. The electric or electronic device according to embodiment 18, which is a radar device for a vehicle, preferably a car or truck.

**Detailed Description of the present invention**

**Definitions**

The following definitions are to be used to interpret the meaning of the terms discussed in the description and recited in the claims.

As used herein, the indefinite article "a" indicates one as well as more than one and does not necessarily limit its referent noun to the singular.

As used herein, the term "about" means that the amount or value in question may be the specific value designated or some other value in its neighbourhood. Generally, the term "about" denoting a certain value is intended to denote a range within $\pm$ 5% of the value. As one example, the phrase "about 100" denotes a range of 100 $\pm$ 5, i.e. the range from 95 to 105. Generally, when the term "about" is used, it can be expected that similar results or effects according to the invention can be obtained within a range of $\pm$5% of the indicated value.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

The term "at least partially" is intended to denote that the following property is fulfilled to a certain extent or completely. Preferably, the term denotes that the following property is fulfilled to at least 50% or more, more preferably at least 75%, even more preferably at least 90 %. It may be preferable that the term denotes "completely".

The terms "substantially" and "essentially" are used to denote that the following feature, property or parameter is either completely (entirely) or to a major degree realized or satisfied, the major degree meaning that the difference to the feature, property or parameter being completely satisfied is such that the difference does not adversely affect the intended result. Thus, depending on the circumstances, the term "substantially" or "essentially" preferably means e.g. at least 80%, at least 90 %, at least 95%, or 100%.

The term "comprising" as used herein is intended to be non-exclusive and open-ended. Thus, for instance a

composition comprising a compound A may include other compounds besides the compound A. However, the term "comprising" also covers the more restrictive meanings of "consisting essentially of" and "consisting of", so that for instance "a coating composition comprising compound A" may also (essentially) consist of the compound A.

The term "at least one" has the same meaning as "one or more", and thus implies that also more than one of the indicated compound class can be present. The term "at least one" thus encompasses the exact value of 1, but also 2, 3, 4 or more.

Ranges given in the following include the upper and lower limits, and any value in between. For example, a range "1 to 10" includes the values 1 and 10, and any value in between, such as 2, 2.5, 4.7 or 8.3

In certain aspects, the claimed subject matter may be characterized by physical properties, such as dielectric constant or dielectric loss at an indicated frequency such as 76.5 GHz, which are typically defined by numerical values. These numerical values are to be determined by test methods usual in the art or by the test methods that are described in the following detailed description, including the examples. Where different test methods give rise to different results, the test methods indicated in the description prevail. In case of a discrepancy between the general description and the methods used in the examples, the method in the examples prevails.

Unless indicated differently, all physical properties are to be determined at standard pressure (1 atm) and room temperature (25°C).

The dielectric constant and the dielectric loss refer to the values at 76.5 GHz unless indicated differently, and the respective values can be determined in accordance with VDM 288 (09/2023).

The density of a material, such as a polymer material, can be determined by displacement unless indicated differently, e.g. in accordance with the method specified in ASTM D792-20.

The light transmittance of a plastic material at a given wavelength may be determined in accordance with ASTM D1003-21.

In the present invention, the term "molded product" is equivalent to "molded product".

## Composition

The composition for forming a molded product of the present invention with its respective components will be described in the following.

The composition of the present invention is for forming a molded product. Without wishing to impose any limitation, the term "for forming a molded product" denotes the ability to process the composition such that a molded product is obtained. The phrase "for forming a molded product" is thus equivalent to "suitable for forming a molded product". Preferably, the composition of the present invention is capable of providing a molded product by extrusion molding, further preferably by extrusion molding without the need for post-molding curing steps.

The composition of the present invention includes (A) a thermoplastic binder phase and, dispersed in the thermoplastic binder phase, (B) at least one material capable of reducing the dielectric constant and dielectric loss of the composition. The composition of the present invention may comprise other components besides the components (A) and (B), but typically essentially consists of or consists of the components (A) and (B).

The amount of (B) the material capable of reducing the dielectric constant and dielectric loss of the composition 5% by weight or more, relative to the total weight of the composition, and the remainder may be formed by the thermoplastic binder phase.

### (A) Thermoplastic binder phase

The thermoplastic binder phase comprises (A.1) one or more cyclic olefin copolymers, and (A.2) a thermoplastic material other than a cyclic olefin copolymer, and may optionally contain further components, such as additives, e.g. impact modifiers. The respective components and their amounts will be described below.

### (A.1) Cyclic olefin copolymer

Cyclic olefin copolymers (COCs) are a class of thermoplastic polymers that belongs to the family of cyclic olefin polymers (COPs). Key characteristics of cyclic olefin copolymers include transparency; low birefringence; chemical resistance to acids, bases and organic solvents; low water absorption; and high glass transition temperature (Tg). COCs can be processed using various manufacturing techniques, including injection molding, extrusion molding, and blow molding.

COPs are characterized by their cyclic molecular structure in repeating units that form part of the polymer main chain, which imparts unique properties to the polymers. COCs can thus be described as copolymers that comprise, as part of a polymer main chain, repeating units derived from two or more different monomers, of which at least one is selected from the group of cyclic olefins. Here, the group of cyclic olefins include cyclic hydrocarbons containing at least one (i.e. at

least one, but possibly also two) carbon-carbon double bond in a ring structure, typically in an alicyclic hydrocarbon ring.

The COC used in the present invention is thus a copolymer derived from (A.1-1) at least one cyclic olefin and (A.1-2) at least one monomer that is copolymerizable with the cyclic olefin (A.1-1).

In one embodiment, the at least one cyclic olefin (A.1-1) may be selected from the group of compounds represented by the following Formulae 1, 2 and 3, and combinations thereof:

Formula 1: 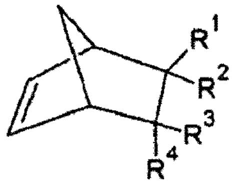

where $R^1$, $R^2$, $R^3$ and $R^4$ are each independently selected from hydrogen; a hydrocarbon group (saturated or unsaturated, and linear, branched or cyclic) comprising 1 to 10, preferably 1 to 6, more preferably 1 to 4, still more preferably 1 to 3 or 1 to 2 carbon atoms; $-(CH_2)COOR^6$; $-(CH_2)_nOCOR^6$; $-(CH_2)_nOR^6$; $(CH_2)_nCN$; $-(CH_2)CONR^7R^8$; where $R^6$, $R^7$ and $R^8$ are selected from hydrogen and a hydrocarbon group (saturated or unsaturated, and linear, branched or cyclic) comprising 1 to 10 carbons atoms, 1 to 6 carbon atoms, 1 to 4 carbon atoms, or 1 to 3 carbon atoms or 1 to 2 carbon atoms, and n is 0, 1, 2, 3 or more; and $-(CH_2)_nR^9$, where $R^9$ is $Si(R^{10})R^{11}$ where $R^{10}$ is a hydrocarbon group (saturated or unsaturated and linear or branched) comprising 1 to 10 carbons atoms, 1 to 6 carbon atoms, 1 to 4 carbon atoms, or 1 to 3 carbon atoms, $R^{11}$ is a halogen, preferably Cl or Br, and n and q are each 0, 1, 2 or 3 or more.. In the above Formula 1 and 2, the hydrocarbon group represented by $R^1$ to $R^8$, may be a straight or branched alkyl group that is optionally substituted by one or more halogens (F, Cl, Br or I, preferably F, Cl or Br) groups;

Formula 2: 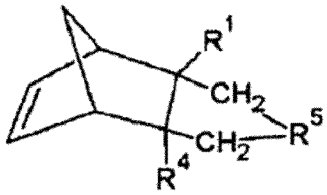

where $R^1$ and $R^4$ are defined as in Formula 1 and $R^5$ is selected from $-CH_2$, -O- or $-NR^6-$, wherein $R^6$ is hydrogen or a hydrocarbon group as defined for $R^1$ to $R^4$ in Formula 1;

Formula 3: 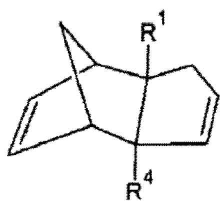

wherein $R^1$ and $R^4$ are defined in the same manner as $R^1$ and $R^4$ as in Formula 1 above, and are preferably hydrogen or a hydrocarbon group having 1 to 10, preferably 1 to 6, further preferably 1 to 4, such as 1 to 3, 1 or 2 or 1 carbon atom(s), such as a straight or branched alkyl group having 1 to 10, preferably 1 to 6, further preferably 1 to 4, such as 1 to 3, 1 or 2, or 1 carbon atom(s). In another preferred embodiment, both of $R^1$ and $R^4$ are hydrogen to provide for cyclopentadiene.

In one embodiment, the at least one cyclic olefin (A.1-1) may be selected from the group consisting of norbornene, dicyclopentadiene, 5-methyl-2-norbonene, 5-ethyl-2-norbornene, 5-ethylene-2-norbomene, 5-propyl-2-norbonene, 5-butyl-2-norbonene, 5-pentanyl-2-norbonene, 5-hexyl-2-norbonene, 5-cyclohexyl-2-norbonene, 5- septyl-2-norbonene, 5-octyl-2-norbonene, 5-nonyl-2-norbonene, 5-decyl-2-norbonene, 5- ethylene-5-chloro-2-norbornene, 5-propyl-5-chloro-2-norbonene, 5-butyl-5-chloro-2- norbonene, 5-pentanyl-5-chloro-2-norbonene, 5-hexyl-5-chloro-2-norbonene, 5-cyclohexyl- 5-chloro-2-norbonene, 5-septyl-5-chloro-2- norbonene, 5-octyl-5-chloro-2-norbonene, 5- nonyl-5-chloro-2-norbonene, 5-decyl-5-chloro-2- norbonene, 5-methyl-5-bromo-2-norbornene, 5-ethylene-5-bromo-2-norbornene, 5-propyl-5- bromo-2-norbonene, 5-butyl-5-bromo-2-norbonene, 5-pentanyl-5-bromo-2-norbonene, 5-hexyl-5-bromo-2-norbonene, 5- cyclohexyl-5-bromo-2-norbonene, 5-septyl-5-bromo-2-norbonene, 5- octyl-5-bromo-2-norbonene, 5-nonyl-5-bromo-2-norbonene, 5-decyl-5-bromo-2-norbonene, methyl 5-norbornene-2-carboxylate, ethyl 5-norbornene-2-carboxylate, phenyl 5-norbornene-2-carboxylate, methyl 2-methyl-5-norbornene-2-carboxylate, butyl 3-phenyl-5-norbornene-2-carboxylate, dimethyl 5-norbornene-2,3-dicarboxylate, cyclohexyl 5-norbornene-2- carboxylate, allyl 5-norbomene-2-carboxylate, 5-norbornene-2-yl acetate, 5-norbornene-2- nitrile, 3-methyl-5-norbornene-2-nitrile, 2,3-dimethyl-5-norbornene-2,3-dinitrile, 5- norbornene-2-carboxylic acid amide, N-methyl-5-norbornene-2-carboxylic acid amide, N ,N-diethyl- 5-norbornene-2-carboxylic acid amide, N,N,N',N'-tetramethyl-5-norbornene-2,3- dicarboxylic acid diamide, 5-chloro-2-norbornene, 5-bromo-2-norbornene, 5-fluoro-2- norbornene, 5-methyl-5-chloro-2-norbornene, chloroethyl 5-norbornene-2-carboxylate, dibromopropyl 5-norbornene-2-carboxylate, dichloropropyl 5-norbornene-2-carboxylate, monochlorophenyl 5-norbornene-2-carboxylate, monobromophenyl 5-norbornene-2-carboxylate, tribromophenyl 5-norbornene-2-carboxylate, 2,3-dichloro-5-norbornene, 2-bromo-5-norbomene, 2-bromomethyl-5-norbornene, tribromobenzyl 5-norbornene-2- carboxylate, 5-norbornene-2,3-dicarboxylic anhydride, 2,3-dimethyl-5-norbomene-2,3-dicarboxylic anhydride, 5-norbornene-2,3-dicarboxylic acid imide, - phenyl-2-methyl-5-norbornene-2,3-dicarboxylic acid imide, 2-trichlorosilyl-5-norbornene, 2-(dimethylmethoxysilyl)-5-norbornene, 2-(dimethylacetylsilyl)-5-norbornene, and 2-trimethylsilyl-5-norbornene.

In one embodiment, the at least one cyclic olefin (A1.1) consists of (i.e., is) norbornene, which is the compound of Formula 1 wherein all of $R^1$ to $R^4$ are hydrogen. In another embodiment, the at least one cyclic olefin (A.1-1) consists of (i.e., is) diyclopentadiene.

In one embodiment, the at least one cyclic olefin (A.1-1) is formed by a combination of norbornene and cyclopentadiene, or by one of norbornene and cyclopentadiene in combination with one or more of the compounds of Formulae 1 to 3 other than norbornene and dicyclopentadiene. In one embodiment, the at least one cyclic olefin (A.1-1) may be formed by 85-95 weight percent norbornene with the remaining 5-15 weight percent dicyclopentadiene, or by 85-95 weight percent dicyclopentadiene with the remaining 5-15 weight percent norbornene.

The at least one monomer (A.1-2) that is copolymerizable with the cyclic olefin (A.1-1) is not particularly limited, but is preferably an alpha-olefin of 2 to 20 carbon atoms, preferably an alpha-olefin of 2 to 12 carbon atoms, more preferably 2 to 8 carbon atoms, most preferably 2 to 6 carbon atoms. In a preferred embodiment, the at least one monomer (A.1-2) that is copolymerizable with the cyclic olefin (A.1-1) is at least one selected from the group consisting of ethylene, propylene, 1-butene, 1-hexene, and 1-octene, more preferably selected from the group consisting of ethylene, propylene, 1-butene and 1-hexene, further preferably selected from the group consisting of ethylene, propylene, 1-butene. Most preferably the at least one monomer (A.1-2) that is copolymerizable with the cyclic olefin (A.1-1) is ethylene, propylene, or a combination of ethylene and propylene.

The relative amounts of the repeating units derived from (A.1-1) at least one cyclic olefin and (A.1-2) at least one monomer that is copolymerizable with the cyclic olefin (A.1-1) in the COC are not particularly limited. In one embodiment, the molar percentage of the repeating units derived from (A.1-1) at least one cyclic olefin is in the range of 10-80%, more preferably 15 to 65%, still more preferably 20 to 50%, and the preferably the molar percentage of the repeating units derived from (A.1-2) the at least one monomer that is copolymerizable with the cyclic olefin (A.1-1) is 20 to 90%, more preferably 35 to 85%, still more preferably 50 - 80%, with the total in each case being 100%. While these percentages relate to all repeating units derived from (A.1-1) at least one cyclic olefin and (A.1-2), also in these embodiments the preferred embodiments of (A.1-1) and (A.1-2) apply, so that the (A.1-1) at least one cyclic olefin may be formed by norbornene, dicyclopentadiene or combinations thereof, preferably norbornene, and the copolymerizable monomer (A.1-2) may be selected from alpha-olefins selected from ethylene, propylene, and 1-butene, preferably ethylene, propylene, or combinations of ethylene and propylene.

In one preferred embodiment, the cyclic olefin copolymer (A.1) is a copolymer consisting of repeating units derived from ethylene and one or more cyclic olefins, wherein the cyclic olefin preferably is norbornene or a norbornene derivative, preferably 2-norbornene. Here, the content of norbornene or the norbornene derivative, which preferably is 2-norbornene, may be 45 mol% or more, preferably 50 mol% or more, of all repeating units of the copolymer of ethylene and a cyclic olefin, the remainder being formed by ethylene.

Thus, a preferred example of a COC that can be employed in the present invention is a binary copolymer of ethylene and norbornene, as represented by the following Formula 4, ich can generally be obtained by copolymerization in the presence of a metallocene catalyst:

Formula 4:

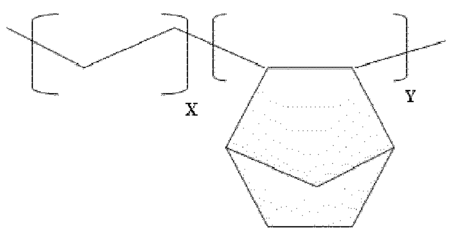

wherein x and y denote the molar percentage of the respective repeating units, with x+y being 100% and x and y being

greater than 0. While the values of x any y are not particularly limited, x is preferably from greater than 0, e.g. 1, 2, 3, 4 or 5, such as 10, up to 50, preferably up to 40, such as from 10 to 40, and y is preferably from 50 to less than 100, e.g. 50 to 95, such as from 60 to 90.

The COC may be prepared by a skilled person based on methods well known in the art. Int the alternative, commercial products can be employed. Examples of commercial products include Topas™ (obtainable from Polyplastics), Apel™ (obtainable from Mitsui Chemicals), Crystal Zenith™ (obtainable from Zeon Corporation), cyclic olefin copolymers obtainable from Cyclics Coprопration, and Arton™ (obtainable from JSR Corporation).

Suitable COC materials are thus readily available to the skilled person. Preferably, the COC satisfies one, two (MFR and density, MFR and Tg, or density and Tg) or all three of the following requirements:

- Melt Flow Rate MFR (under a load of 2.16 kg, determined in accordance with ASTM D1238): 0.1 - 100 g/10 minutes, preferably 0.5 to 20 g/10 minutes, more preferably 1.0 to 10 g/10 minutes;
- Density (determined in accordance with ISO 1183): 0.95 to 1.15 g/cm$^3$, preferably 0.98 to 1.05 g/cm$^3$;
- Glass transition temperature Tg (determined in accordance with ISO 11357-1): 100 °C or higher, preferably 120°C or higher, more preferably 140 °C or higher, still more preferably 145 °C or higher, but typically 200 °C or less, preferably 180 °C or less.

**(A.2) Thermoplastic material other than a cyclic olefin copolymer**

The thermoplastic material other than a COC is not particularly limited as long as it can form a continuous phase with the COC. The thermoplastic material (A.2) is formed by one or more polymers of which none contains repeating units derived from a monomer having an ethylenically unsaturated group as part of a ring structure, such as norbornene or cyclopentadiene. The thermoplastic material (A.2) is thus structurally different from the COC (A.1).

While the thermoplastic material (A.2) is not particularly limited, it is preferably selected from the group consisting of polyesters, polyolefins, in particular homopolymers of ethylene, homopolymers of propylene, copolymers of ethylene and propylene, and copolymers of one or both of ethylene and propylene with other alpha-olefins, polyamides, polycarbonates, polystyrene, copolymers of styrene such as ABS, SAN and SB, acrylic polymers, polyether sulfones, polyether ether ketones, polyetherimide, polyphenylene oxide, polyphenylene sulfide, and melt-processible fluorinated polymers such as PVDF or PTFE.

The type and relative amount of the thermoplastic material other than a COC can be chosen by a skilled person based on the intended application and the desired balance of properties. In practice, it has been found that in particular polyolefins, polyesters and polyamides are able to provide for a suitable balance of properties. In particular when it is desired to process the molded article by laser welding, polyesters such poly(alkylene) terephthalates, e.g. PBT (poly(butylene) terephthalate) and PET (poly(ethylene) terephthalate) have provided good results, and PBT and PET are thus preferably used. Particularly good results have been obtained when combining a COC based on ethylene and norbornene with PBT if laser weldability is desired.

Suitable thermoplastic materials are well known to a skilled person and can be selected from general engineering plastics, many of which are commercially available. In particular, types that are suitable for injection molding can be freely selected, and the required properties are well known to a skilled person. A detailed description of these materials and methods for their production is thus omitted.

**Composition of the thermoplastic plastic binder phase and optional additives**

The relative amounts of the (A.1) one or more cyclic olefin copolymers and (A.2) a thermoplastic material other than a cyclic olefin copolymer forming the thermoplastic binder phase (A) is such that the total amount the one or more cyclic olefin copolymers (A1.1) is from 10 to 95%, preferably 10 to 85% by weight, further preferably 15 to 75% by weight, still further preferably 15 to 60% by weight, still further preferably 15 to 40% by weight of the total weight of the thermoplastic binder phase A.

The remainder of the binder phase is formed by (A.2) a thermoplastic material other than a cyclic olefin copolymer and optionally further additives as described below, for instance by one or more impact modifiers.

In one embodiment, 75% by weight or more, such as 80% by weight or more, 85% by weight or more, 90% by weight or more, e.g. 95% by weight or more, but 100% by weight or less, such as 98% by weight or less, of the thermoplastic binder phase is formed by (A.1) one or more cyclic olefin copolymers, and (A.2) a thermoplastic material other than a cyclic olefin copolymer. The part of the thermoplastic binder phase (A) that is not formed by the (A.1) one or more cyclic olefin copolymers and (A.2) a thermoplastic material other than a cyclic olefin copolymer, if present, may be formed by impact modifiers and other optional components, such as plasticisers, flame retardants, colourants, processing aids, antistatic agents, mold release agents, heat stabilisers, as well as other additives known in the art.

An embodiment wherein an impact modifier is present in the thermoplastic binder phase is particular preferred in

order to impart durability and other desired physical properties to the resulting molded product. The impact may, or may not, have a core-shell structure. While impact modifiers known in the art can be used without limitation, preferably the impact modifier may be selected from the group consisting of styrene block copolymers (SBC), such as styrene-ethylene-butylene-styrene block copolymer (SEBS), methyl methacrylate-butadiene- styrene (MBS), acrylonitrile-butadiene-styrene (ABS), acrylic impact modifiers (AIM), such as acrylate methacrylate copolymers, acrylonitrile-styrene-acrylate (ASA), ethylene propylene diene monomer (EPDM) copolymers, chlorinated polyethylene (CPE), ethylene-vinyl acetate copolymer (EVA), acrylonitrile-butadiene rubber (NBR), maleic-anhydride modified polymers such as maleic anhydride grafted EPDM and maleic anhydride grafted ethylene/$C_{3-12}$ $\alpha$-olefin copolymers, ethylene-unsaturated epoxide copolymers, ethylene-carboxylic acid anhydride copolymers, polymers made from hydroxyl-functional monomers, e.g. including repeating units derived from hydroxy $C_{2-6}$ alkyl (meth)acrylate; and combinations thereof.

Thus, in the embodiment wherein (A.2) the thermoplastic material other than COC is selected from polyolefins, polyesters and polyamides, preferably polyesters such as PET and PBT, the impact modifier is structurally different from these materials (A.2) and can be selected from the group of impact modifiers listed in the paragraph above, including SBCs such as SEBS. A SBC such as SEBS is particularly useful as it acts not only as impact modifier but also improves the compatibility between the polyester, such as PBT, and the COC.

In one embodiment, the thermoplastic binder phase comprises, in % by weight relative to the total weight of the binder phase:

| | |
|---|---|
| cyclic olefin copolymer | 15 to 75, such as 20 to 70, or 35 to 65; |
| poly(alkylene) terephthalate | 25 to 85, such as 30 to 80, or 35 to 65; |
| impact modifier | 0 to 20, such as 5 to 15, or 10 to 15; |

wherein these components preferably amount for 80% by weight or more, such as 85% or more, 90% or more or 95% or more, but 100% or less, such as 98% or less, of the total weight of the thermoplastic binder phase (A). Also here, the poly(alkylene) terephthalate is preferably formed by PET and/or PBT, preferably by only PBT, and the impact modifier is preferably a SBC, more preferably SEBS.

**(B) Material capable of reducing the dielectric constant and dielectric loss of the composition**

In addition to the thermoplastic binder phase (A), the composition of the present invention comprises as component (B) at least one material capable of reducing the dielectric constant and dielectric loss of the composition.

Here, by denoting the component as being "capable of reducing the dielectric constant and dielectric loss", it is meant that the composition comprising said component (B) has both a lower dielectric constant and a lower dielectric loss at 76.5 GHz than the same composition lacking the component (B), i.e. the thermoplastic binder phase in case the composition consists of the components (A) and (B).

The presence of the component (B) thus improves the properties of the composition when used e.g. for forming a radome, as thereby the potential operating range of the radar device can be improved. At the same time, due to the presence of the specific binder phase, still a molded article having the required properties in use, as reflecting in tensile modulus, tensile strength, and elongation at break can be obtained.

Further, if the density of the component (B) is lower than that of the binder phase, the presence of the component (B) can lead to a reduction in density of the composition as compared to the binder phase (A) alone, which allows realising a weight reduction.

While the nature of the component (B) is not particularly limited, it has been found that materials made from glass provide preferable results and allow obtaining the desired balance of properties. Thus, in one embodiment of the composition of the present application comprises, as the component (B) one or more of B.1glass fibers; B.2 hollow glass spheres; and B.3 aerogels. Note that the density of glass spheres and aerogels is typically lower than that of the binder phase, so that the inclusion of these can lead to an overall lower density as compared to the binder phase.

Glass spheres and aerogels entrap air and thus lower the dielectric constant effectively, while glass fibers have a reinforcing effect. The composition of the present invention thus preferably contains both of B.1 glass fibers and B.2 hollow glass spheres. If both are used in combination, the weight ratio of the hollow glass spheres is preferably 25% or more, preferably 50% or more, of the total weight of the glass fibers and the glass spheres to ensure a reduction in total density of the composition and to ensure a low dielectric loss.

Glass spheres (also named glass bubbles) can have any suitable size. In practice, a material having an average diameter (determined as volume-based $D_{50}$ by a laser light scattering method) of 50$\mu$m or less, such as 30 $\mu$m or less or 25 $\mu$m or less, but 1$\mu$m or more, such as 5 $\mu$m or more or 10$\mu$m or more, has been proven useful. The glass spheres preferably have a isostatic crush strength (determined by 3M QCM 14.1.8 method) of 100 MPa or higher, such as 130 MPa or higher, preferably 150 MPa or higher, in order to avoid crushing during processing. Within this range, a large particle size $D_{50}$ may

lead to a stronger reduction of dielectric loss due to the larger space of entrapped air, while larger particles generally have a low or isostatic crush strength.

The glass fibers are not particularly limited, but typically have a strand length (determined in accordance with JIS R 3420) of 0.5 mm or more, preferably 1.0 mm or more, such as 2.0 mm or more, but typically 10.0 mm or less, preferably 8.0 mm or less. Too long fibers may lead to a rough surface of the molded article and may complicate the molding process, while too short fibers may not provide the desired strengthening effect.

The glass forming the glass fibers and/or the glass spheres is not particularly limited and can be selected from a wide range of materials including C-glass, R-glass, D-glass and E-glass, but is preferably E-glass. E-glass is known in the art as denoting an alumino-borosilicate glass, which contains alumina ($Al_2O_3$), boron oxide ($B_2O_3$), and silica ($SiO_2$). Such a glass may be characterized by a dielectric constant of 6.5 at 1 MHz or less and/or a volume resistivity of $10^{13}$ to $10^{15}$ $\Omega$ cm. E-glass typically contains 53-57 wt.-% $SiO_2$, 12 to 15 wt.-% $Al_2O_3$, 5 to 8 wt.-% of $B_2O_3$, 0 to 0.6 wt.-% F, from 0 to less than 1 wt.-% $Na_2O$ and $K_2O$, up to 0.5 wt.-% $Fe_2O_3$, and a total of 22-26 wt.-% of CaO and MgO. Such glass is available e.g. from Sant-Gobain Vetrotex Deutschland GmbH.

Aerogels are highly porous material that exhibit a combination of low density, high porosity, and unique physical properties. They are composed of a gel in which the liquid component has been replaced with a gas, resulting in a material that is almost entirely made up of air. Aerogels may have a bulk density in the range of 0.001 to 0.200 g/cm$^3$, such as between 0.003 and 0.150 g/cm$^3$ or 0.060 g/cm$^3$ and 0.130 g/cm$^3$. Bulk density is defined as the ratio of weight to volume, where the weight can be measured with a microbalance of $10^{-5}$ g accuracy and the volume of aerogels can be measured geometrically.

The porosity may be 80% or higher, such 90% or higher (e.g. as determined by nitrogen adsorption by the BET method, e.g. using a ASAP 2020 instrument (Micromeritics, USA). Before analysis, samples may be degassed under vacuum at 150° C for at least 2 h.

Aerogels can be made from various materials, including silica, carbon, polymers, and more. A common method of producing aerogels involves the creation of a gel using a precursor material, such as a silica gel. The gel is then subjected to a process called supercritical drying, during which the liquid component is replaced by a gas, leaving behind the solid aerogel structure. Aerogels and methods for their production are known to a skilled person. As one example, reference can be made to US 9,073,759 B2, and further information on the properties and synthesis of polyimide aerogel can be found in the scientific literature (see e.g. S, S.S., Rai, N. & Chauhan, I. Multifunctional Aerogels: A comprehensive review on types, synthesis and applications of aerogels. J Sol-Gel Sci Technol 105, 324-336 (2023) and the documents cited therein). Of course also commercial aerogel materials may be used, such as Polyimide Aerogel Powder from Blueshift Materials, USA known under the tradename AeroZero™.

The aerogel is not particularly limited, but is preferably selected from silica and polymeric aerogels, such as e.g. obtained from polyimide. The aerogel preferably has a porosity of 90% or more.

The content of the (B) at least one material capable of reducing the dielectric constant and dielectric loss in the composition for forming a molded article of the present invention is 5% by weight or more, relative to the total weight of the composition. If several materials that qualify as (B) material capable of reducing the dielectric constant and dielectric loss of the composition are used in combination, this refers to the total weight of all materials that qualify as (B) material capable of reducing the dielectric constant and dielectric loss of the composition. The content may be 6% by weight or more, 7% by weight or more, 8% by weight or more, 9% by weight or more, 10% by weight or more, 11 % by weight or more, preferably 15% by weight or more, such as 20% by weight or more (e.g. 21% by weight or more) in order to strengthen the effects of the respective materials as explained above. However, if the amount of the (B) at least one material capable of reducing the dielectric constant is too high, cohesion and moldability may be impaired. The upper limit of the total content of (B) at least one material capable of reducing the dielectric constant is thus generally 35% by weight or less, preferably 30% by weight or less, such as 25% by weight or less.

Thus, in one embodiment, the composition for forming a molded product of the present invention comprises 30% by weight or less of (B) at least one material capable of reducing the dielectric constant and dielectric loss, and 70% by weight or more of the thermoplastic binder phase (B), the total of (A) and (B) forming 90% by weight or more of the composition, preferably 95% by weight of more, such as 100% by weight.

**Properties and advantages of the composition for forming a molded product**

By a suitable selection and combination of materials as described above, it is possible to obtain a composition for forming a molded product, such as a radome, that excels existing compositions by providing for a reduced dielectric loss and a reduced dielectric constant, thereby opening the path to increasing the operating range of radar devices such as used in the automotive industry. At the same time, the proper choice of components allows achieving a lower density than conventional materials, thereby facilitating weight reductions and improving fuel economy. At the same time, the composition for forming a moulded product of the present application may be readily processable by techniques such as laser welding, and also allows obtaining physical properties such as tensile modulus, tensile strength, impact resistance

or elongation to break that do not necessarily excel currently used materials but which still satisfy current requirements in e.g. the automotive industry. Also, warpage of a molded product may be suppressed or full avoided.

By a proper selection of materials and choosing suitable amounts, the present invention that allows obtaining a composition that can we used for forming a moulded product having one, two, three, four, five of all six of the following properties a - f :

a. Dielectric constant (dk) (@76.5 GHz) according to VDM 288 (09/2023): 3.50 or less, preferably 3.20 or less, more preferably 3.00 or less, such as 2.90 or less, 2.85 or less, or 2.80 or less, most preferably 2.70 or less, such as 2.65 or less, 2.60 or less of 2.57 or less. While there is no particular limitation on the lower limit, the dielectric constant is typically 2.50 or higher.

b. Dielectric loss (df) (@76.5 GHz) according to VDM 288 (09/2023): 0.014 or less, such as 0.013 or less, 0.012 or less, or 0.11 or less, preferably 0.10 or less, such as 0.09 or less, more preferably 0.08 or less or 0.07 or less, such as 0.05 or less or 0.04 or less. While the lower limit is not particularly limited, it may 0.01 or more, such as 0.02 or more or 0.03 or more.

c. Density according to ISO 1183-1: 1.35 g/cm$^3$ or less, such 1.30 g/cm$^3$ or less or 1.25 g/cm$^3$ or less, preferably 1.20 g/cm$^3$ or less, more 1.15 g/cm$^3$ or less, most preferably 1.10 g/cm$^3$ or less. While there is no limitation on the lower limit of the density, it is typically 1.00 g/cm$^3$ or more.

d. Elongation at break determined on an injection-molded Type 1A test bar in accordance with ISO 527 1/2: 3.5% or higher, such as 3.7% or higher, 3.8% or higher, or 4.0 % or higher, but typically 7.0% or less, such as 6% or less, e.g. 5.5 % or less.

e. Tensile strength at break determined on an injection-molded Type 1A test bar in accordance with ISO 527 1/2 (given in MPa): 40 or higher, such as 45 or higher, preferably 50 or higher, but typically 110 or less, such as 100 or less or 90 or less, e.g. 70 or less.

f. Tensile modulus determined on an injection-molded Type 1A test bar in accordance with ISO 527 1/2 (given in MPa): 1,000 or more, such as 1,500 or more, e.g. 1,800 or more, but typically 5,000 or less, such as 4,000 or less.

### Molded Product

The molded product obtainable from the composition of the present invention can basically take any form, but is preferably a molded product that is used in an application for which a low dielectric loss is desirable. This includes housings for any type of electrical and electronic equipment, such as those emitting and/or receiving radiation in the range of 5 MHz to 130 GHz. Besides radomes such as used in vehicles such as cars and trucks, this also includes mobile communication equipment, for example utilizing 5G networks, or electronic devices that are intended for connection to Wi-Fi networks. The molded products of the present invention thus not only include radomes, but also parts such as coverings and housings of cell phones, tablet computers, laptop computers, desktop computers, printers, scanners, remote controls, transmission towers, Wi-Fi transmission devices, routers, Wi-Fi repeaters, and gaming consoles.

### Method for producing a molded product

The method for producing a moulded product is not particularly limited and can be freely chosen by a skilled person. However, in view of the properties of the composition of the present invention and in order to increase productivity and reduce production costs, the molded product is preferably formed by a technique involving extrusion molding and/or laser welding. The conditions can be suitably selected by a skilled person in light of common knowledge and the guidance in the following examples.

### Examples

The present invention will be further illustrated by the following examples, to which the present invention is however not limited.

The following components were used in the examples:

| | |
|---|---|
| Component A.1: | Topas™ 6015S (obtainable from Topas Advanced Polymers GmbH, Germany), a COC based on ethylene and norbornene suitable for injection molding, having a density of 1.02 g/cm$^3$ , a melt volume flow rate (MVR) at<br>260°C under a load of 2.16 kg of 4 cm$^3$/10 minutes, a glass transition temperature of 158°C, and a light transmittance of 91.9% |
| Component A.2: | Dinadur™ PBT1SO1 HI-0022: a commercial impact-modified poly(butylene) terephthalate, obtainable from Nordmann Rassmann (Germany); having a denvisity of 1.22 g/cm$^3$ and suitable for injectin molding (high MFR grade)<br>Ultradur B4520, a PBT obtainable from BASF, not impact-modified |
| Component B: | Glass fibers: Nitto Boseki CN 3J-256™ having a strand length of 3.0 mm<br>Glas spheres: iM30K™ Hi-Strength Glass Bubbles, available from 3M, average particle diameter: 18μm, isostatic crush strength 193 MPa |
| Impact Modifier: | Kraton™ MD6951MS, a styrene-ethylene/butylene block copolymer having a polystyrene content of 34% and an MFR (2.16 kg, 230°C, according to ASTM D 1238) of 36 - 50, avaible from Kraton Corporation |

The following material was used as comparative materials:

| | |
|---|---|
| Ultradur™ B 4300 G4 | PBT having a glass fiber content of 20%, available from BASF, having a MVR of 16 cm$^3$/10 minutes at 250°C and 2.16 kg load, suitable for injection molding and to be used for the preparation of e.g. connectors and small automotive parts |
| Preperm™ | Commercial material available from Premix, part of Avient Corporation, advertised for the production of parts for high frequency applications such as antenna coverings due to low dielectric loss. The exact composition of the commercial material is not published. |

**Comparative Examples 1 and 2 and Examples 1-4**

The components (A.1) and (A.2) shown in Table 1 below were mixed to prepare compounds and injection molded. The compositions were prepared during an extrusion process using an 8-zone co-rotating 24 mm twin screw extruder. Dry-blends of the impact modified PBT/COC resins were prepared and feeded through the hopper in Zone 1 into the extrusion device. The screw speed was set to 300 rpm while the corresponding screw torque was 30 Nm. The temperature was set to 270 °C to melt the resins. The materials (B) were added via a gravimetrical side-feeding unit at zone 7 and the screw speed of this feeder was set to 100 rpm. During the compounding, a pressure of about 26 bar was reached.

Table 1: Composition of Comparative Examples (CE) 1 and 2 and Examples (Ex) 1 - 4

| | Topas 6015S (Compound A.1) | Dinadur PBT (Compound A.2) | Glass spheres (Compound B) | Glass Fibres (Compound B) |
|---|---|---|---|---|
| CE1 | 60,0 | 40,0 | 0,0 | 0,0 |
| CE2 | 40,0 | 60,0 | 0,0 | 0,0 |
| Ex1 | 51,0 | 34,0 | 5,0 | 10,0 |
| Ex2 | 48,0 | 32,0 | 10,0 | 10,0 |
| Ex3 | 34,0 | 51,0 | 5,0 | 10,0 |
| Ex4 | 32,0 | 48,0 | 10,0 | 10,0 |

Injection molding of the prepared compounds was done to prepare 1A testbars in accordance with ISO and plaques for mechanical and dielectrical testing. For the final application, the compounds were also injection molded to form the radome.

In the above examples and comparative examples, PBT and COC were used in a ratio of 3:2 and vice versa, and blended with glass spheres and glass fibres as shown. Content of the glass spheres and glass fibres used was evaluated in a range between 0-10 weight %. Based on an observed, undesired warpage effect, the compositions obtained in Examples 1 and 3 were not selected for further testing. This result suggests that an amount of component (B) of higher than 15% may be preferable to reduce warping.

## Comparative Example 5

A molded product was obtained in the same manner as in Comparative Examples 1 and 2 and Examples 1- 4, except that the commercial product Ultradur B4300 G4 was used without any additional components (product of BASF, PBT and 20wt.% glass fibers only, no COC).

The obtained test pieces were evaluated in the same manner as set out above. The results are shown in Table 2:

Table 2: Test Results

| | dk @ 76.5 GHz | Tensile Modulus (MPa) | Tensile Strength (MPa) | Elongation at Break (%) | Density (g/cm$^3$) | Impact Resistance (kJ/m$^2$) |
|---|---|---|---|---|---|---|
| CE1 | 2.60 | 1828 | 35.2 | 5.0 | 1.13 | 12.5 |
| CE2 | 2.52 | 2075 | 42.1 | 5.3 | 1.09 | 15.3 |
| Ex2 | 2.57 | 3927 | 51.7 | 4.4 | 1.10 | 13.8 |
| Ex4 | 2.52 | 4119 | 49.6 | 3.8 | 1.06 | 11.0 |
| CE5 | 3.70 | 7000 | 110 | 3.5 | 1.45 | 54.0 |
| * dk measured at 1 MHz | | | | | | |

A comparison between comparative example 1 and example 2 (relying on the same binder phase and differing in the presence/absence of component B) shows that component B is capable to reduce density and to reduce the dielectric constant dk. Further, component (B) is capable to increasing tensile modulus and tensile strength such as to obtain a material that is more dureable and suitable for practical application. The same trend is seen between comparative example 2 and example 4. This shows that with a composition as claimed the desired balance of properties can be obtained, namely a low dielectric constant in combination with a low density get tensile properties that are satisfactory for practical use.

Incidentally, all of the compositions relying on the combination of a COC and a thermoplastic material as binder phase are superior to the commercial product employed in comparative example 5 in terms of dielectric loss and density.

## Examples 5 to 8 and Comparative Examples 6 and 7

The compositions obtained in examples 1-4 were evaluated for laser-weldability, but it was found that the transparency of the commercial impact-modified PBT Dinadur™ PBT1SO1 HI-0022 was too low at only 3%. The compound was thus exchanged by non-impact-modified PBT Ultradur™ B4520 (BASF), which was compounded with the impact modifier Kraton MD6951. The compositions set out in Table 3 were prepared and used for injection molding of test pieces in the same manner as described above. Separately, a test piece was formed from the commercial product Preperm™ (available from Avient Corporation) and evaluated in the same manner.

Table 3: Composition of Comparative Examples (CE) 6 and 7 and Examples (Ex) 5 - 8

| | Topas 6015S (COC, Compound A.1) | PBT (Ultradur B4520) (Compound A.2) | Glass spheres (Compound B) | Glass Fibres (Compound B) | Impact Modifier |
|---|---|---|---|---|---|
| Ex5 | 29.5 | 45.5 | 10 | 10 | 5 |
| Ex6 | 27.0 | 43.0 | 10 | 10 | 10 |
| Ex7 | 45.5 | 29.5 | 10 | 10 | 5 |
| Ex8 | 43.0 | 27.0 | 10 | 10 | 10 |
| CE6 | | 70.0 | 10 | 20 | |
| CE7 | | | Preperm™ | | |

The results are shown in Table 4:

Table 4: Test Results

| | dk @ 76.5 GHz | Tensile Modulus (MPa) | Tensile Strength (MPa) | Elongation at Break (%) | Density ($g/cm^3$) | Impact Resistance ($kJ/m^2$) |
|---|---|---|---|---|---|---|
| Ex5 | 2.58 | 4219 | 60.7 | 5.2 | 1.13 | 24.9 |
| Ex6 | 2.56 | 3605 | 54.6 | 5.7 | 1.09 | 28.1 |
| Ex7 | 2.50 | 4357 | 53.2 | 4.2 | 1.10 | 14.5 |
| Ex8 | 2.48 | 3570 | 45.3 | 4.2 | 1.06 | 16.4 |
| CE6 | 2.89 | 7241 | 106.6 | 5.6 | 1.45 | 41.3 |
| CE7 | 2.6 | Not available | | 22 | Not available | 25 |
| * dk measured at 1 MHz | | | | | | |

Of the above examples 5-8, only examples 5 and 6 were found to be laser-weldable. This is because in examples 7 and 8 the relative amount of COC was too high (or the amount of PBT too low) to allow laser-weldability. Example 5 thus combined a very low loss with laser weldability and good mechanical properties.

Further, the above experiments show that the dielectric loss of the compositions of the present invention is lower than that of the commercial product Preperm while showing similarly good properties for practical use, such as impact resistance.

**Claims**

**1.** Composition for forming a molded product, comprising

A a thermoplastic binder phase, and, dispersed in the thermoplastic binder phase
B at least one material capable of reducing the dielectric constant and dielectric loss of the composition
wherein the thermoplastic binder phase comprises at least

A.1 one or more cyclic olefin copolymers and
A.2 a thermoplastic material other than a cyclic olefin copolymer that is preferably selected from the group consisting of polyesters, polyolefins, in particular homopolymers of ethylene, homopolymers of propylene, copolymers of ethylene and propylene, copolymers of one or both of ethylene and propylene with other alpha-olefins, polyamides, polycarbonates, polystyrene, copolymers of styrene such as ABS, SAN and SB, acrylic polymers, polyether sulfones, polyether ether ketones, polyetherimide, polyphenylene oxide, polyphenylene sulfide, and melt-processible fluorinated polymers such as PVDF or PTFE,

wherein the amount of B the material capable of reducing the dielectric constant and dielectric loss of the composition 5% by weight or more, relative to the total weight of the composition, and
wherein the total amount the one or more cyclic olefin copolymers is from 10 to 95% by weight of the total weight of the thermoplastic binder phase A.

**2.** The composition for forming a molded product according to claim 1, wherein B the material capable of reducing the dielectric constant and dielectric loss of the composition comprises one or more of

B.1 glass fibers;
B.2 hollow glass spheres; and
B.3 aerogels;

and preferably both of B.1 glass fibers and B.2 hollow glass spheres.

**3.** The composition for forming a molded product according to claim 1 or 2, wherein the thermoplastic binder phase

comprises in addition to the components A.1 and A.2

A.3 one or more impact modifiers that may or may not have a core-shell structure, preferably selected from the group consisting of styrene block copolymers (SBC), such as styrene-ethylene-butylene-styrene block copolymer (SEBS), methyl methacrylate-butadiene- styrene (MBS), acrylonitrile-butadiene-styrene (ABS), acrylic impact modifiers (AIM), such as acrylate methacrylate copolymers, acrylonitrile-styrene-acrylate (ASA), ethylene propylene diene monomer (EPDM) copolymers, chlorinated polyethylene (CPE), ethylene-vinyl acetate copolymer (EVA), acrylonitrile-butadiene rubber (NBR), maleic-anhydride modified polymers such as maleic anhydride grafted EPDM and maleic anhydride grafted ethylene/C3-12 $\alpha$-olefin copolymers, ethylene-unsaturated epoxide copolymers, ethylene-carboxylic acid anhydride copolymers, polymers made from hydroxyl-functional monomers, e.g. including repeating units derived from hydroxy $C_{2-6}$ alkyl (meth)acrylate; and combinations thereof;

wherein the impact modifier is present in an amount of 0.1 to 10% by weight of the total weight of the thermoplastic binder phase A.

**4.** The composition for forming a molded product according to claim 1, 2 or 3, wherein the composition satisfies one or more of the following

(e) Density: 1.30 g/cm$^3$ or less
(f) Dielectric Constant at 76.5 GHz: 2.58 or less
(g) Dielectric Loss at 76.5 GHz: 0.01 or less
(h) Light Transmittance at 980 nm: 8% or more.

**5.** The composition for forming a molded product according to any one of claims 1 to 4, wherein A.2 the thermoplastic material other than a cyclic olefin copolymer is selected from polyolefins and polyesters, wherein the polyester preferably is a poly(alkylene) terephthalate, more preferably poly(butylene)terephthalate, and wherein preferably the thermoplastic material other than a cyclic olefin copolymer that is selected from polyolefins and polyesters is present in an amount of from 30 to 65 % by weight of the total composition.

**6.** The composition for forming a molded product according to any one of claims 1 to 5, wherein the amount of cyclic olefin copolymer is from 10 to 85% by weight, preferably from 15 to 60 % by weight, of the total composition.

**7.** The composition for forming a molded product according to any one of claims 1 to 6, wherein the cyclic olefin copolymer is a copolymer consisting of repeating units derived from ethylene and one or more cyclic olefins, wherein the cyclic olefin preferably is norbornene or a norbornene derivative, preferably 2-norbornene.

**8.** The composition for forming a molded product according to Claim 7, wherein the content of norbornene or the norbornene derivative, which preferably is 2-norbornene, is 45 mol% or more, preferably 50 mol% or more, of all repeating units of the copolymer of ethylene and a cyclic olefin.

**9.** The composition for forming a molded product according to any one of claims 1 to 8, which comprises glass fibers and hollow glass spheres as component B, and which satisfies the following relative amounts of the components in % by weight, relative to the total weight of the composition:

| | | |
|---|---|---|
| A | thermoplastic binder phase | 60 to 90, preferably 70 to 80 |
| B.1 | glass fibers | 5 to 20, preferably 10 to 15 |
| B.2 | hollow glass spheres | 5 to 20, preferably 10 to 15 |

**10.** The composition for forming a molded product according to claim 9, wherein the thermoplastic binder phase comprises, in % by weight relative to the total weight of the binder phase:

| | | |
|---|---|---|
| A.1 | cyclic olefin copolymer | 15 to 75 |
| A.2 | poly(alkylene) terephthalate | 25 to 85 |
| A.3 | impact modifier | 0 to 20 |

**11.** The composition for forming a molded product according to any one of claims 1 to 7, wherein the component B comprises B.3 one or more aerogels, wherein the aerogel is preferably selected from silica and polymeric aerogels, such as e.g. obtained from polyimide, and/or wherein preferably the aerogel has a porosity of 90% or more.

**12.** The composition for forming a molded product according to any one of claims 1 to 11, wherein the glass forming the glass fibers and/or the hollow glass spheres has a dielectric constant of 6.5 (at 1 MHz) or less.

**13.** A molded article obtainable from the composition according to any one of Claims 1 to 12.

**14.** The molded article according to claim 13, which is a radome or housing for an electronic device, the electronic device preferably being a device emitting and/or receiving radiation in the range of 5 MHz to 130 GHz

**15.** The molded article according to claim 14, wherein the radome or housing is part of a radar device of vehicles, preferably cars or trucks.

**16.** A method for producing the molded article according to claim 13 or 14, which comprises processing the composition according to any one of claims 1 to 12 by extrusion molding and/or laser welding.

**17.** Use of a composition as defined in any one of claims 1 to 12 for producing a housing or radome of an electronic device, preferably a device emitting and/or receiving radiation in the range of 5 MHz to 130 GHz, more preferably a radar device.

**18.** An electric or electronic device emitting and/or receiving electromagnetic radiation in the range of 5 MHz to 130 GHz, the device comprising a housing or radome made from a composition as defined in any one of claims 1 to 12 or a molded article according to claim 13 or 14.

**19.** The electric or electronic device according to claim 18, which is a radar device for a vehicle, preferably a car or truck.

Europäisches Patentamt
European Patent Office
Office européen des brevets

# EUROPEAN SEARCH REPORT

Application Number
EP 24 16 3772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/218851 A1 (DAINIPPON INK & CHEMICALS [JP]) 16 November 2023 (2023-11-16) * example 2 * | 1-19 | INV. C08L45/00 |
| A | US 2009/208685 A1 (RIVERS BRIAN PATRICK [US] ET AL) 20 August 2009 (2009-08-20) * the whole document * | 1-19 | |
| X | CN 111 647 247 A (SHANGHAI RES INSTITUTE OF MATERIALS) 11 September 2020 (2020-09-11) * examples 5,6 * | 1-19 | |
| X | CN 115 746 488 A (KINGFA SCIENCE & TECHNOLOGY CO) 7 March 2023 (2023-03-07) * claim 1 * | 1-19 | |
| X | WO 2023/227738 A1 (SABIC GLOBAL TECHNOLOGIES BV [NL]) 30 November 2023 (2023-11-30) * table 3 * | 9,12 | TECHNICAL FIELDS SEARCHED (IPC) |
| X | CN 110 625 063 A (LIUZHOU SHUNSHENG MACHINERY CO LTD) 31 December 2019 (2019-12-31) * the whole document * | 1-19 | C08F C08L |
| T | VAZ C. M. ET AL: "Casein and soybean protein-based thermoplastics and composites as alternative biodegradable polymers for biomedical applications", JOURNAL OF BIOMEDICAL MATERIALS RESEARCH PART A, vol. 65A, no. 1, 3 March 2003 (2003-03-03), pages 60-70, XP093122677, US ISSN: 1549-3296, DOI: 10.1002/jbm.a.10416 * the whole document * | 1-19 | |

The present search report has been drawn up for all claims

3

| Place of search | Date of completion of the search | Examiner |
|---|---|---|
| Munich | 22 October 2024 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

Application Number
EP 24 16 3772

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 16 3772

The Search Division considers that the present European patent application does not comply with the requirements of unity of invention and relates to several inventions or groups of inventions, namely:

1. claims: 1-19(partially)

   Composition according to claim 1 where B comprises at least glass fibers.

---

2. claims: 1-19(partially)

   Composition according to claim 1 where B comprises at least hollow glass spheres.

---

3. claims: 1-19(partially)

   Composition according to claim 1 where B comprises at least aerogels

---

# ANNEX TO THE EUROPEAN SEARCH REPORT ON EUROPEAN PATENT APPLICATION NO. EP 24 16 3772

This annex lists the patent family members relating to the patent documents cited in the above-mentioned European search report. The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| WO 2023218851 A1 | 16-11-2023 | JP WO2023218851 A1 | 16-11-2023 |
| | | WO 2023218851 A1 | 16-11-2023 |
| US 2009208685 A1 | 20-08-2009 | US 2009208685 A1 | 20-08-2009 |
| | | WO 2009105205 A1 | 27-08-2009 |
| CN 111647247 A | 11-09-2020 | NONE | |
| CN 115746488 A | 07-03-2023 | CN 115746488 A | 07-03-2023 |
| | | WO 2024114448 A1 | 06-06-2024 |
| WO 2023227738 A1 | 30-11-2023 | NONE | |
| CN 110625063 A | 31-12-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2001074146 A1
- WO 2018151800 A2
- US 9073759 B2

### Non-patent literature cited in the description


- **S, S.S.** ; **RAI, N.** ; **CHAUHAN, I.** Multifunctional Aerogels: A comprehensive review on types, synthesis and applications of aerogels. *J Sol-Gel Sci Technol*, 2023, vol. 105, 324-336